# EUROPEAN PATENT SPECIFICATION

(11) **EP 2 678 217 B1**
(45) Date of publication and mention of the grant of the patent: **16.05.2018**
(21) Application number: 12750236.7
(22) Date of filing: 16.02.2012
(51) Int. Cl.: B63B 35/32, E02B 15/04, E02B 15/10

(54) **OIL SPILL RESPONSE SYSTEM**
SYSTEM ZUR REAKTION AUF ÖLKATASTROPHEN
SYSTÈME DE RÉPONSE AU DÉVERSEMENT D'HYDROCARBURES

(30) Priority: 25.02.2011 FI 20110063
(43) Date of publication of application: 01.01.2014
(73) Proprietor: M&L Patent Oy AB, 10900 Hanko (FI)
(72) Inventor: LUNDIN, Lars Ingram, FI- 10900 Hanko (FI)
(74) Representative: Seppo Laine Oy
(86) International application number: PCT/FI2012/050154
(87) International publication number: WO 2012/113978

(56) References cited:
- WO-A1-89/10296
- WO-A1-2006/061453
- WO-A1-2006/061453
- FI-B- 68 694
- US-A- 3 968 041
- US-A- 4 690 093

## Description

### FIELD OF THE INVENTION

The invention relates to an oil spill response system as defined in the preamble of claim 1. Particularly, the invention relates to an oil spill response system suitable for treatment of petroleum and for its removal from the surface of water.

### BACKGROUND OF THE INVENTION

Prior art in the field of the invention has been disclosed in patent FI68694. In the oil-spill-combatting water craft according to the publication, the oil present on the water is directed, by means of a water flow, into a conduit disposed in the interior of the water craft, wherein the oil is separated from the surface of water by means of a rotating brush cassette. The device functions well when the structure of the brush is appropriately adapted to the properties of the oil to be collected. The properties of petroleum change considerably as it floats on the surface of water. The change is influenced by time and temperature. At first, petroleum released into water from the land, sea bottom or a ship, is very light. In time, the light materials evaporate from the petroleum into air. Finally, the oil is emulsified with water, forming a gelatinous mass. Thus, the known oil collectors function optimally only for a specific type of oil; yet the purpose is always to be able to collect out all available oil from the surface of water as quickly as possible. As the separator is located in the interior of the conduit, its service and cleaning is difficult, and quick readjustments to it according to the properties of the oil to be collected are not possible.

US4690093 discloses an oil spill response system according to the preamble of claim 1.

### OBJECTIVE OF THE INVENTION

The objective of the invention is to remedy the defects of the prior art referred to above. Particularly, the objective of the invention is to disclose a novel oil spill response system, by means of which the oil can be effectively recovered continuously, irrespective of the viscosity of the oil, which can be easily serviced and repaired and which is an assembly that is separate of the ship, enabling its quick installation and replacement according to changing collecting conditions.

### SUMMARY OF THE INVENTION

The oil spill response system according to the invention is used for collecting the oil present at the water surface into an oil combatting vessel having at the side thereof an inlet located at the water level, and a water flow conduit beginning at the inlet. The flow conduit includes an oil separating unit for separating the oil present on the surface of water. Finally, the cleaned water is directed into a return conduit provided with an outlet. According to the invention, the oil separating unit includes a first separator to be installed into the flow conduit in the flow direction of water and being formed by a brush cassette constituting a separating surface obliquely rising from the water in the flow direction of water. Following the brush cassette, the flow conduit has a framework module, to which the brush cassette is supported and which has a second separator comprising a skimmer provided with a rotating drum brush and a cleaning comb. Further, the framework module has water outlets for directing cleaned water to the return conduit.

Thus, the oil separating unit according to the invention constitutes a separate and detached assembly which has a framework module, a skimmer disposed in the interior of the framework module and a brush cassette supported onto the framework module. This assembly can be moved and installed in a flow conduit provided in a ship as a functional assembly without having to carry out actual installation work at the ship. In a preferred embodiment of the invention, the framework module includes suitable suspension or support members, by means of which it is supported to the front wall of a collector tank. Thus, the framework module with the separators can be accurately installed in an appropriate position relative to the collector tank.

Preferably, the first belt-type separator extends sufficiently high above the water surface and the collector tank for oil is included below the top end thereof, while the second separator is disposed below the first separator before the collector tank in the flow direction of water. Thus, the oil collected by both of the separators is collected into the same collector tank, which considerably saves space and makes the entire apparatus a small one.

In one embodiment of the invention, the bottom end of the brush cassette is located in the immediate vicinity of the inlet of the conduit. Thus, it constitutes an effective wave absorber before the second oil separator. In this case, no other wave absorbing structures are needed for the conduit; instead, it can be made as a simple and straight structure effectively directing the flows.

Preferably, the outlet of the flow conduit, also suitably disposed at the side of the vessel before the inlet in the direction of travel of the ship, includes flow guides arranged to constitute a negative pressure in the flow conduit for realizing a steady surface flow into the inlet and to the area of the separators.

In the invention, the brush structure of the first separator is selected, as known per se, to be suitable for recovery of heavy oil as well as debris and algae. The brush structure of the second separator is selected, as known per se, to be suitable for recovery of light oil.

The oil spill response system according to the invention provides considerable advantages as compared to the prior art. The idea according to the invention is based on the fact that no fixed oil separators need be built on the ship; instead, the separators are located in a separate framework module that can be located as an assembly into a flow conduit provided on the ship. Only a simple flow conduit need be made on the ship. Secondly, the modules can be prefabricated to be suitable for different types of oil pollution. Thus, deployment according to the conditions just by selecting the suitable framework module is very quick. Further in the invention, oily debris and algae as well as heavy oil are first removed from the water, the light oil flowing through the first separator to the second separator, wherein it is collected. Thus, the oil collecting devices do not require any adjustment as the properties of the oil change in the course of the collecting activity; instead, the apparatus continuously functions in an optimal fashion, recovering both heavy and light fractions of the oil. In the invention, the collection of the oil proceeds steadily and steplessly from one collector to the other as the properties of the oil change.

### LIST OF FIGURES

In the following section, the invention will be described in detail with reference to the accompanying drawings, in which
Fig. 1 illustrates the structure according to the invention as a cross-sectional side view,
Fig. 2 illustrates the structure of Fig. 1 as seen from the top,
Fig. 3 illustrates a flow conduit from the side,
Fig. 4 illustrates a flow conduit from the top,
Fig. 5 illustrates a second embodiment of a flow conduit from the side,
Fig. 6 illustrates the embodiment of Fig. 5 from the top, and
Fig. 7 illustrates a brush structure of a second separator.

### DETAILED DESCRIPTION OF THE INVENTION

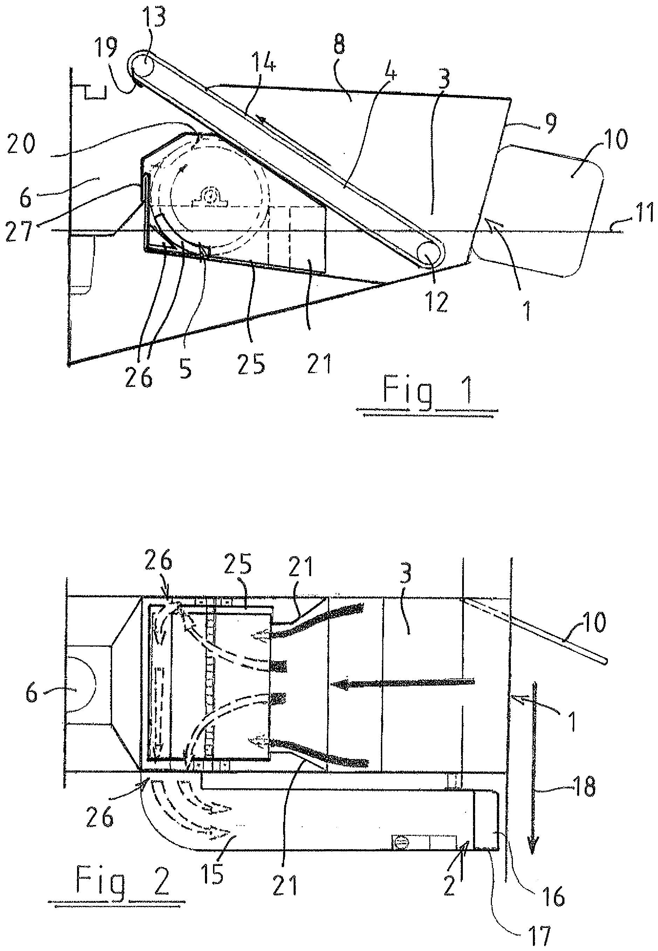

Fig. 1 and 2 show, at the side 9 of a vessel 8, at the water level, i.e. partially above and partially below the water surface, an opening and closing hatch 10 which constitutes an inlet 1 for a substantially horizontal water flow conduit 3 extending to the interior of the vessel. The flow conduit returns back to the side of the vessel along a return conduit 15, constituting an outlet 2, via which the water flows out from the conduit.

Located in the flow conduit 3 there is a substantially equally wide framework module 25, i.e. a rigid framework structure, in the interior of which a second separator 5, i.e. a skimmer, is located, a first separator 4, i.e. a brush cassette, being supported onto the framework module in an oblique position. At the inner end of the framework module there is a support structure 27, such as a groove-type holder, by means of which the framework module is suspended in its place at the edge of an oil collector tank 6 disposed at the end of the conduit.

More precisely, the framework module 25 is so located in the flow conduit 3 that extending from below the water surface 11 right from the vicinity of the inlet 1 there is the first separator 4, i.e. a brush cassette, having a bottom end support roll 12, a top end support roll 13 as well as a circulating belt 14 provided with a brush surface and a housing. The brush cassette is oriented obliquely upward in the flow direction of water in the flow conduit, and its top end rises so high above the water surface 11 that the framework module 25 with the second separator 5, i.e. a skimmer, having a cylindrical brush, are disposed at an appropriate height partially below the water surface 1. Both the skimmer and the brush cassette have comb structures or scrapers 19,20 known per se to clean their respective bristles. The brush cassette 4 and the skimmer 5 are so located one above the other that impurities from both of them flow into the common collector tank 6. At the side of the framework module 25 there are water outlets 26, via which the water cleaned by the skimmer 5 is able to flow into the return conduit 15.

As seen from Fig. 2, the water returns along the return conduit 15 from the inner end of the flow conduit 3 to the outlet at the side of the vessel. In the outlet there are as flow guides a transverse hatch 16 as well as a flow blocking wall 17 that is transverse in the direction of movement of the vessel so that the water is only let downward and backward from the discharge conduit. As the vessel moves in the direction of the arrow 18, this provides a steady suction into the flow conduit.

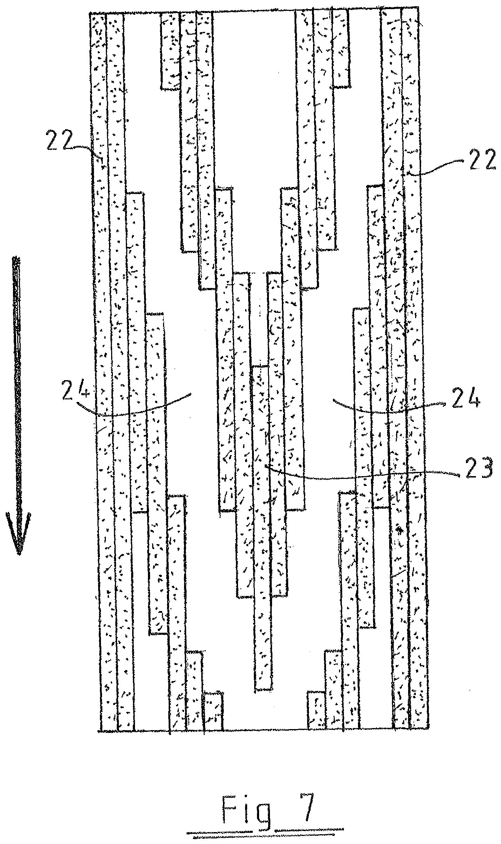

In accordance with Fig. 2, the framework module 25 has flow contractors 21 reducing the width of the flow conduit 3 before the second separator so that the flow of water is entirely caught on the brush surface of the skimmer. It is seen from the brush surface of Fig. 7 that at the edges thereof there are (dotted) longer brushes 22 of approximately 50mm and arrow type shapes 23 in the rotating direction from the respective longer bristles at the center, in which case between the edges and the arrow shapes there are left areas 24 of shorter bristles, wherein the oil is initially caught and wherefrom it is effectively absorbed into the longer bristles.

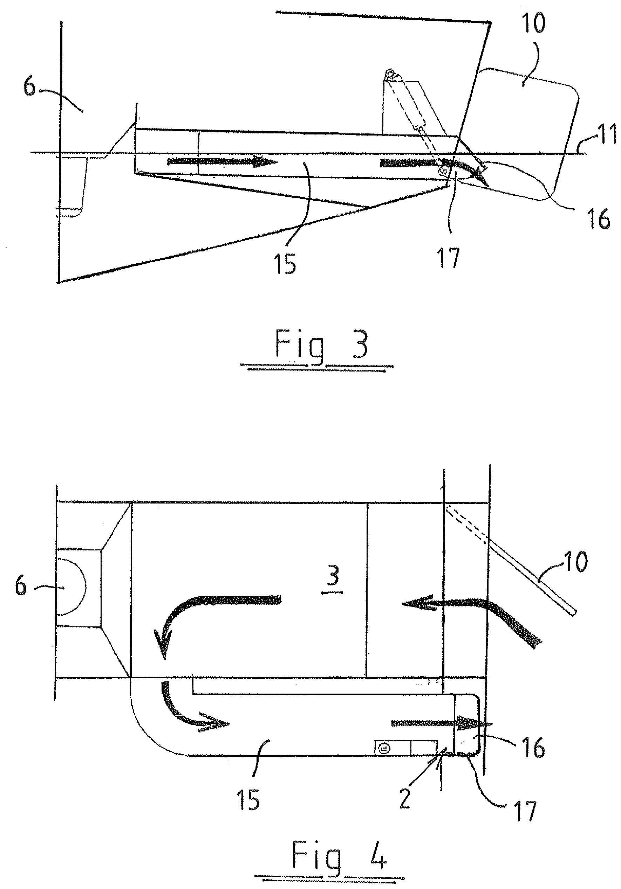

From Fig. 3 and 4 it is more specifically seen how water and impurities present on the surface flow into the flow conduit 3 as directed by the opened hatch 10 and a long oil boom (not illustrated in the figure) attached to the hatch, and, after cleaning, from the flow conduit out from the vessel along the return conduit 15. The suction enhancing the flow is caused at the end of the return conduit 15 by the transverse hatch 16 and the flow blocking wall 17 disposed at the front edge. It is to be noted that in this embodiment also the return conduit 15 is disposed partially on the surface of water, i.e. the return conduit is only partially filled with water. This is essentially important in realizing a good suction at the end of the return conduit. To a straight and empty conduit 3 illustrated by Fig. 3 and 4, the framework module 25 according to the invention can be inserted to be fixed in its place to be supported to the front edge of the collector tank 6 disposed at the end of the conduit. It is clear that also other ways of attachment are possible.

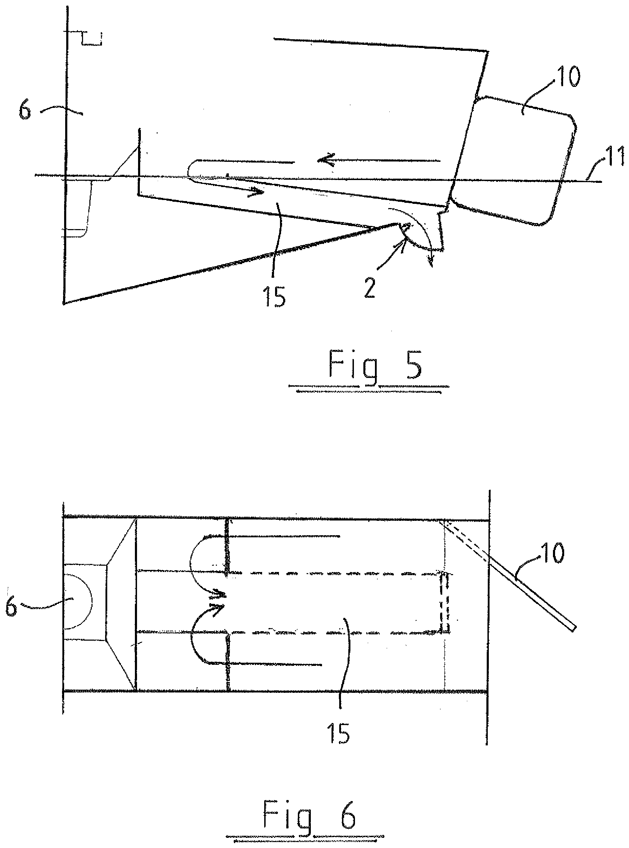

Fig. 5 and 6 illustrate a second embodiment, wherein the return conduit 15 is located below the flow conduit 3, i.e. entirely below the water surface. Also in this embodiment, the return flow is directed steadily to the area delimited by the hatch 10 and the oil boom, i.e. below the oil to be taken for cleaning. The appropriate and steady direction of the return flow prevents swirling of the oil present on the surface and its mixing with water before cleaning and simultaneously enables the surfacing of impurities remaining in the return flow and their reflow into the cleaning process.

The invention is not limited merely to the examples referred to above; instead, many variations are possible within the scope of the inventive idea defined by the claims.

## Claims

1. An oil spill response system for collecting oil present on a water surface, the system comprising:
a flow conduit (3) configured to extend from an inlet of a vessel to the interior of the vessel, the flow conduit having an oil separating unit for separating the oil present on the surface of water and the flow conduit leading to a return conduit (15) provided with an outlet (2), whereby
the oil separating unit includes a first separator (4) installed in the flow conduit (3) in the flow direction of water, wherein the first separator (4) is formed by a brush cassette, which includes a bottom end support roll (12), a top end support roll (13), a circulating belt (14) provided with a brush surface, and a housing, the brush cassette constituting a separating surface obliquely rising from the water in the flow direction of water, **characterized in that** the oil separating unit further includes a framework module (25) which is placed after the first separator (4) and disposed in the flow conduit, to which framework module the brush cassette is supported and which framework module has a second separator (5) provided with a rotating drum brush, as well as water outlets (26) for directing the cleaned water to the return conduit (15).

2. The oil spill response system according to claim 1, **characterized in that** below the top end of the first separator (4) there is a collector tank (6), while the second separator (5) is disposed below the first separator before the collector tank in the flow direction of water, in which case oil collected by both of the separators is collected into the same collector tank.

3. The oil spill response system according to claim 1 or 2, **characterized in that** the framework module (25) is supported to the front wall of the collector tank (6).

4. The oil spill response system according to any one of claims 1 to 3, **characterized in that** the bottom end of the brush cassette (4) is located in the immediate vicinity of the inlet (1) of the flow conduit (3) to form a wave absorber.

5. The oil spill response system according to any one of claims 1 to 4, **characterized in that** the outlet (2) of the flow conduit (1) includes flow guides (16, 17) arranged to constitute a negative pressure in the flow conduit for realizing a steady surface flow to the inlet (1) and to the area of the separators (4, 5).

6. The oil spill response system according to any one of claims 1 to 5, **characterized in that** the brush structure of the first separator (4) is selected to be suitable for recovery of oil with a high viscosity as well as debris and algae.

7. The oil spill response system according to any one of claims 1 to 6, **characterized in that** the brush structure of the second separator (5) is selected to be suitable for recovery of oil with a low viscosity.

## Patentansprüche

1. Ölverschmutzungsreaktionssystem zum Sammeln von Öl, das sich auf einer Wasseroberfläche befindet, wobei das System Folgendes umfasst:
eine Flussröhre (3), die konfiguriert ist, sich von einem Einlass eines Gefäßes bis in das Innere des Gefäßes zu erstrecken, wobei die Flussröhre eine Ölabscheideeinheit zum Abscheiden des Öls aufweist, das sich auf der Oberfläche des Wassers befindet, und die Flussröhre zu einer Rückführröhre (15) führt, die mit einem Auslass (2) versehen ist,
wobei
die Öltrenneinheit einen ersten Abscheider (4) aufweist, der in die Flussröhre (3) in der Fließrichtung des Wassers eingebaut ist, wobei der erste Abscheider (4) durch eine Bürstenkassette ausgebildet ist, die eine bodenendige Stützwalze (12), eine oberseitenendige Stützwalze (13), ein Umlaufband (14), das mit einer Bürstenoberfläche versehen ist, und ein Gehäuse aufweist, wobei die Bürstenkassette eine Abscheideoberfläche bildet, die schräg aus dem Wasser in der Fließrichtung des Wassers aufsteigt, **dadurch gekennzeichnet, dass**
die Ölabscheideeinheit weiter ein Rahmenmodul (25) aufweist, das nach dem ersten Abscheider (4) angeordnet und in der Flussröhre vorgesehen ist, wobei auf das Rahmenmodul die Bürstenkassette gestützt ist und das Rahmenmodul einen zweiten Abscheider (5), der mit einer Drehtrommelbürste versehen ist, sowie Wasserauslässe (26) zum Lenken des gereinigten Wassers in die Rückführröhre (15) aufweist.

2. Ölverschmutzungsreaktionssystem nach Anspruch 1, **dadurch gekennzeichnet, dass** sich unter dem Oberseitenende des ersten Abscheiders (4) ein Sammeltank (6) befindet, während der zweite Abscheider (5) unterhalb des ersten Abscheiders in der Fließrichtung des Wassers vor dem Sammeltank vorgesehen ist, wobei in diesem Fall Öl, das von beiden Abscheidern gesammelt wurde, in demselben Sammeltank gesammelt wird.

3. Ölverschmutzungsreaktionssystem nach Anspruch 1 oder 2, **dadurch gekennzeichnet, dass** das Rahmenmodul (25) auf die Vorderwand des Sammeltanks (6) gestützt ist.

4. Ölverschmutzungsreaktionssystem nach einem der Ansprüche 1 bis 3, **dadurch gekennzeichnet, dass** das Bodenende der Bürstenkassette (4) sich in der unmittelbaren Nachbarschaft des Einlasses (1) der Flussröhre (3) befindet, um einen Wellenabsorber auszubilden.

5. Ölverschmutzungsreaktionssystem nach einem der Ansprüche 1 bis 4, **dadurch gekennzeichnet, dass** der Auslass (2) der Flussröhre (1) Flussführungen (16, 17) aufweist, die angeordnet sind, einen Negativdruck in der Flussröhre zu bilden, um einen steten Oberflächenfluss in den Einlass (1) und den Bereich der Abscheider (4, 5) zu verwirklichen.

6. Ölverschmutzungsreaktionssystem nach einem der Ansprüche 1 bis 5, **dadurch gekennzeichnet, dass** die Bürstenstruktur des ersten Abscheiders (4) dazu ausgewählt ist, für die Gewinnung von Öl mit einer hohen Viskosität sowie von Trümmern und Algen geeignet zu sein.

7. Ölverschmutzungsreaktionssystem nach einem der Ansprüche 1 bis 6, **dadurch gekennzeichnet, dass** die Bürstenstruktur des zweiten Abscheiders (5) dazu ausgewählt ist, für die Gewinnung von Öl mit einer niedrigen Viskosität geeignet zu sein.

## Revendications

1. Système de réponse au déversement d'hydrocarbures pour collecter les hydrocarbures présents sur une surface d'eau, le système comprenant :
un conduit d'écoulement (3) configuré pour s'étendre d'un orifice d'entrée d'un navire à l'intérieur du navire, le conduit d'écoulement ayant une unité de séparation d'hydrocarbures pour séparer les hydrocarbures présents à la surface de l'eau et le conduit d'écoulement menant à un conduit de retour (15) doté d'un orifice de sortie (2),
selon lequel
l'unité de séparation d'hydrocarbures inclut un premier séparateur (4) installé dans le conduit d'écoulement (3) dans la direction d'écoulement de l'eau, dans lequel le premier séparateur (4) est formé par une cassette de brosse, laquelle inclut un rouleau support d'extrémité inférieure (12), un rouleau support d'extrémité supérieure (13), une courroie de circulation (14) dotée d'une surface de brosse, et un boîtier, la cassette de brosse constituant une surface de séparation s'élevant de manière oblique depuis l'eau dans la direction d'écoulement de l'eau, **caractérisé en ce que**
l'unité de séparation d'hydrocarbures inclut en outre un module cadre (25) qui est placé après le premier séparateur (4) et disposé dans le conduit d'écoulement, ledit module cadre supporte la cassette de brosse et lequel module cadre a un second séparateur (5) doté d'une broche de tambour rotative, ainsi que des orifices de sortie d'eau (26) pour diriger l'eau propre jusqu'au conduit de retour (15).

2. Système de réponse au déversement d'hydrocarbures selon la revendication 1, **caractérisé en ce qu'**en dessous de l'extrémité supérieure du premier séparateur (4) se trouve un réservoir collecteur (6), tandis que le second séparateur (5) est disposé en dessous du premier séparateur avant le réservoir collecteur dans la direction d'écoulement de l'eau, auquel cas les hydrocarbures collectés par les deux séparateurs sont collectés dans le même réservoir collecteur.

3. Système de réponse au déversement d'hydrocarbures selon la revendication 1 ou 2, **caractérisé en ce que** le module cadre (25) est supporté sur la paroi avant du réservoir collecteur (6).

4. Système de réponse au déversement d'hydrocarbures selon l'une quelconque des revendications 1 à 3, **caractérisé en ce que** l'extrémité inférieure de la cassette de brosse (4) est située à proximité immédiate de l'orifice d'entrée (1) du conduit d'écoulement (3) pour former un amortisseur de vagues.

5. Système de réponse au déversement d'hydrocarbures selon l'une quelconque des revendications 1 à 4, **caractérisé en ce que** l'orifice de sortie (2) du conduit d'écoulement (1) inclut des guides d'écoulement (16, 17) agencés pour constituer une pression négative dans le conduit d'écoulement pour la mise en oeuvre d'un écoulement à surface régulière vers l'orifice d'entrée (1) et vers la zone des séparateurs (4, 5).

6. Système de réponse au déversement d'hydrocarbures selon l'une quelconque des revendications 1 à 5, **caractérisé en ce que** la structure de brosse du premier séparateur (4) est sélectionnée pour être adaptable à la récupération d'hydrocarbures de viscosité élevée ainsi que de débris et d'algues.

7. Système de réponse au déversement d'hydrocarbures selon l'une quelconque des revendications 1 à 6, **caractérisé en ce que** la structure de brosse du second séparateur (5) est sélectionnée pour être adaptée à la récupération d'hydrocarbures de faible viscosité.
